# EUROPÄISCHE PATENTSCHRIFT

(11) **EP 4 263 106 B1**
(45) Veröffentlichungstag und Bekanntmachung des Hinweises auf die Patenterteilung: **25.09.2024**
(21) Anmeldenummer: 21830956.5
(22) Anmeldetag: 01.12.2021
(51) Int. Cl.: B23K 9/20, B23K 9/32

(54) **SCHWEISSVORRICHTUNG ZUR VERSCHWEISSUNG EINES SCHWEISSBOLZENS MIT GASVERTEILUNG**
DEVICE FOR WELDING A STUD WITH GAS PARTITION
DISPOSITIF DE SOUDAGE DE GOUJON AVEC RÉPARTITION DU GAZ

(30) Priorität: 17.12.2020 EP 20214831
(43) Veröffentlichungstag der Anmeldung: 25.10.2023
(73) Patentinhaber: Hilti Aktiengesellschaft, 9494 Schaan (LI)
(72) Erfinder: ERHARDT, Rolf, 9470 Buchs SG (CH); ZIELBAUER, Julia, 9464 Rüthi (CH); ANDREAE, Sigrid, 9478 Azmoos (CH)
(74) Vertreter: Hilti Aktiengesellschaft Corporate Intellectual Property
(86) Internationale Anmeldenummer: PCT/EP2021/083777
(87) Internationale Veröffentlichungsnummer: WO 2022/128475

(56) Entgegenhaltungen:
- WO-A1-2008/011908
- DE-U1- 202016 100 923
- US-A- 2 790 066

## Beschreibung

### Technisches Gebiet

Die Erfindung betrifft allgemein eine Schweissvorrichtung zur Verschweissung eines Schweissbolzens entlang einer Schweissachse in einer Schweissrichtung mit einem Untergrund entsprechend dem Oberbegriff des Anspruchs 1 (siehe z.B. DE 20 2016 100923 U1). Im Besonderen betrifft die Erfindung eine Schweisspistole.

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Dazu wird der Bolzen von einem elektrisch leitfähigen Bolzenhalter gehalten. Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der elektrische Strom abgeschaltet und der Bolzen in das verflüssigte Material eingetaucht, während dieses Material erkaltet und fest wird. Der Bolzen ist dann stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Schutzgas zu spülen. Dabei strömt das Schutzgas an der Schweissstelle mit dem verflüssigten Material vorbei und verdrängt den dort unter Umständen vorhandenen Sauerstoff aus der Umgebungsluft.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen.

Aus der DE 20 2016 100 923 U1 ist eine Schweissvorrichtung bekannt, welche einen Schweisselementhalter, eine sich um den Schweisselementhalter herum erstreckende Spule, eine Schweisskammer-Anordnung mit einer Schweisskammer, einen Schutzgas-Eintrittsraum und eine Schutzgas-Kanalanordnung aufweist. Die Schutzgas-Kanalanordnung verbindet den Schutzgas-Eintrittsraum mit der Schweisskammer und weist eine Filteranordnung zu einer Beeinflussung des Schutzgases auf.

Aus der WO 2008/011908 A1 ist eine Vorrichtung zum Anschweissen eines ringförmigen Schweisselements an ein Werkstück mit einer Bohrung bekannt. Ein Formiergas wird durch das Schweisselement hindurch gegen einen Innenrand der Bohrung gerichtet. Dadurch soll das Schweissbad an dieser Stelle formiert und eine saubere Schweissnaht erhalten werden. Ausserdem soll verhindert werden, dass Atmosphäre durch die Bohrung hindurch in den Schweissspalt gesaugt wird.

Aus der US 2,790,066 ist eine Bolzenschweissvorrichtung bekannt, welche einen Bolzenschweisspistolenkörper mit einer röhrenförmigen Abschirmung aufweist. In dem Bolzenschweisspistolenkörper ist ein verschiebbares Spannfutter zum Tragen eines an ein Werkstück zu schweissenden Bolzens angeordnet, wobei die Abschirmung das Spannfutter umgibt und radial von dem Spannfutter beabstandet ist.

### Darstellung der Erfindung

Aufgabe der Erfindung ist es, eine Vorrichtung zur Verfügung zu stellen, mit welchem eine Befestigung eines Bolzens an einem Untergrund verbessert wird.

Diese Aufgabe ist gelöst bei einer Schweissvorrichtung zur Verschweissung eines Schweissbolzens entlang einer Schweissachse in einer Schweissrichtung mit einem Untergrund, umfassend eine Schutzgasglocke mit einem ringförmig um die Schweissachse angeordneten Schutzgaseinlass, mit einem Schutzgasauslass, und mit einer in die Schweissrichtung weisenden Mündung, wobei die Mündung quer zu der Schweissrichtung einen Mündungsdurchmesser aufweist, wobei der Schutzgaseinlass entgegen der Schweissrichtung einen Einlassabstand zu der Mündung aufweist, wobei der Schutzgasauslass entgegen der Schweissrichtung einen Auslassabstand zu der Mündung aufweist, weiterhin umfassend eine Haltevorrichtung zum Halten des Schweissbolzens innerhalb der Schutzgasglocke während eines Schweissvorgangs, wobei die Haltevorrichtung einen Aussendurchmesser und eine Bolzenaufnahme mit einem Innendurchmesser aufweist, wobei der Auslassabstand mindestens die Hälfte einer Differenz aus dem Mündungsdurchmesser und dem Aussendurchmesser beträgt. Ebenfalls ist die Aufgabe gelöst, wenn der Auslassabstand mindestens so gross ist wie der Einlassabstand. Die Schweissvorrichtung ist bevorzugt als Schweisspistole ausgebildet. Durch die ringförmige Anordnung des Schutzgaseinlasses und die von der Mündung beabstandete Anordnung des Schutzgasauslasses ist gewährleistet, dass das Schutzgas gleichförmig aus allen Richtungen radial auf die Schweissstelle zu und dann im Wesentlichen axial von der Schweissstelle wegströmt.

Eine vorteilhafte Ausgestaltung ist dadurch gekennzeichnet, dass der Auslassabstand mindestens die Hälfte der Differenz aus dem Mündungsdurchmesser und dem Innendurchmesser beträgt oder mindestens so gross ist wie der Einlassabstand. Eine weitere vorteilhafte Ausgestaltung ist dadurch gekennzeichnet, dass der Auslassabstand mindestens die Hälfte der Differenz aus dem Mündungsdurchmesser und dem Aussendurchmesser beträgt und mindestens halb so gross ist wie der Einlassabstand.

Eine vorteilhafte Ausgestaltung ist dadurch gekennzeichnet, dass der Schutzgaseinlass zur Erzeugung einer Schutzgasströmung entlang der Mündung radial auf die Setzachse zu, wenn die Mündung abgedeckt ist, auf einen radial äusseren Bereich der Mündung gerichtet ist.

Eine vorteilhafte Ausgestaltung ist dadurch gekennzeichnet, dass der Schutzgaseinlass eine ringförmige, die Schweissachse umlaufende Einlassöffnung umfasst. Eine alternative Ausgestaltung ist dadurch gekennzeichnet, dass der Schutzgaseinlass eine Vielzahl von ringförmig um die Schweissachse angeordneten Einlassöffnungen umfasst.

Eine vorteilhafte Ausgestaltung ist dadurch gekennzeichnet, dass der Schutzgasauslass eine Vielzahl von ringförmig um die Schweissachse angeordneten Auslassöffnungen umfasst. Bevorzugt ist der Schutzgasauslass in einer Richtung quer zu der Schweissachse versetzt zu dem Schutzgaseinlass angeordnet. Eine weitere vorteilhafte Ausgestaltung ist dadurch gekennzeichnet, dass der Schutzgasauslass bezüglich der Schweissachse radial durch die Schutzgasglocke nach aussen in die Umgebung führt.

### Ausführungsbeispiele

Die Erfindung wird nachstehend anhand von Ausführungsbeispielen unter Bezugnahme auf die Zeichnungen näher erläutert. Es zeigen:
- Fig. 1: schematisch eine Schweissvorrichtung,
- Fig. 2: schematisch eine Schweissvorrichtung in einer teilweisen Längsschnittsansicht, und
- Fig. 3: schematisch eine Schweissvorrichtung in einer teilweisen Längsschnittsansicht.

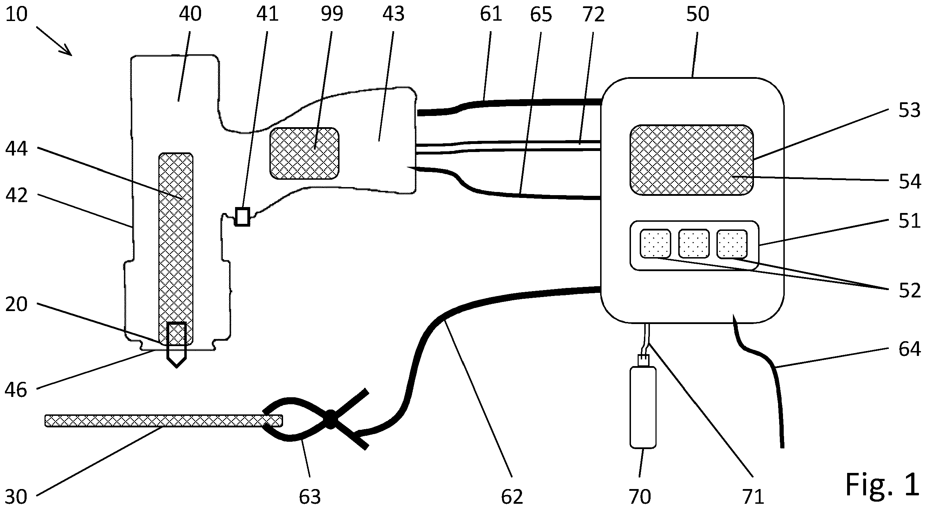

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, ein als Gasflasche ausgebildetes Gasreservoir 70, eine schlauchförmige Gasversorgungsleitung 71 und einen Gasschlauch 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Die Gasversorgungsleitung 71 und der Gasschlauch 72 dienen einer Versorgung eines Kontaktbereichs zwischen dem Schweissbolzen 20 und dem Untergrund 30 mit einem Schutzgas aus dem Gasreservoir 70, um den Kontaktbereich während eines Schweissvorgangs vor einer Oxidation durch Sauerstoff einer Umgebung zu schützen. Zur Steuerung eines Gasflusses zu dem Kontaktbereich umfasst das Gasreservoir 70, die Gasversorgungsleitung 71, das Schweissgerät 50, der Gasschlauch 72 oder die Schweisspistole 40 ein nicht gezeigtes, insbesondere regelbares Ventil auf.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

Die Schweisspistole 40 weist ein Gehäuse 42 mit einer Mündung 46 auf, von welchem ein Handgriff 43 mit dem Auslöseschalter 41 abragt. Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 99 zum Steuern der verschiedenen Komponenten und Einrichtungen der Schweisspistole und des Schweissgeräts 50 auf. Die Steuereinrichtung 99 ist zum Steuern eines oder mehrerer Parameter des Schweissvorgangs vorgesehen. Die Steuereinrichtung 99 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung auf, welche den Bolzenhalter 44 mit einer Kraft von der Mündung 46 weg nach hinten (in Fig. 1 nach oben) beaufschlagt, wenn die Bolzenabhubeinrichtung aktiviert ist. Über eine nicht gezeigte Signalleitung kommuniziert die Steuereinrichtung 99 mit der Bolzenabhubeinrichtung, um die Bolzenabhubeinrichtung zu steuern, insbesondere zu aktivieren und zu deaktivieren.

Die Schweisspistole 40 weist ferner eine als Federelement oder als ein zweiter Hubmagnet ausgebildete Bolzeneintaucheinrichtung auf, welche den Bolzenhalter 44 mit einer Kraft zu der Mündung 46 hin nach vorne (in Fig. 1 nach unten) beaufschlagt, wenn die Bolzeneintaucheinrichtung aktiviert ist. Über eine nicht gezeigte Signalleitung kommuniziert die Steuereinrichtung 99 mit der Bolzeneintaucheinrichtung, um die Bolzeneintaucheinrichtung zu steuern, insbesondere zu aktivieren und zu deaktivieren. Wenn die Bolzeneintaucheinrichtung als ein Federelement ausgebildet ist, wird dieses Federelement vorzugsweise gespannt, wenn der Bolzenhalter von der Bolzenabhubeinrichtung nach hinten bewegt wird, so dass das Federelement den Bolzenhalter nach vorne bewegt, sobald die Bolzenabhubeinrichtung deaktiviert wird.

Bei einem Schweissverfahren mit der Schweissvorrichtung 10 werden zunächst der Untergrund 30 und der Bolzen 20 zur Verfügung gestellt. In einem weiteren Schritt werden von einem Anwender über die Eingabeeinrichtung Informationen eingegeben, beispielsweise über gewünschte Parameter des folgenden Schweissvorgangs. In einem weiteren Schritt wird der Schweissbolzen 20 von dem Schweissgerät 50 mittels des ersten Kabels 61 und des zweiten Kabels 62 mit einem Schweissstrom zwischen dem Schweissbolzen 20 und dem Untergrund 30 beaufschlagt. In einem weiteren Schritt wird der Schweissbolzen 20 mittels der Bolzenabhubeinrichtung von dem Untergrund unter Beibehaltung des zwischen dem Schweissbolzen 20 und dem Untergrund 30 fliessenden Schweissstroms abgehoben, wobei sich zwischen dem Schweissbolzen 20 und dem Untergrund 30 ein Lichtbogen ausbildet. Insbesondere aufgrund der von dem Lichtbogen erzeugten Hitze wird dann ein Material des Schweissbolzens 20 und/oder des Untergrunds 30 teilweise verflüssigt. In einem weiteren Schritt wird der Schweissbolzen 20 mittels der Bolzeneintaucheinrichtung in das verflüssigte Material des Schweissbolzens 20 beziehungsweise des Untergrunds 30 eingetaucht. Danach erstarrt das verflüssigte Material des Schweissbolzens 20 beziehungsweise des Untergrunds 30, so dass der Schweissbolzen 20 stoffschlüssig mit dem Untergrund 30 verbunden ist.

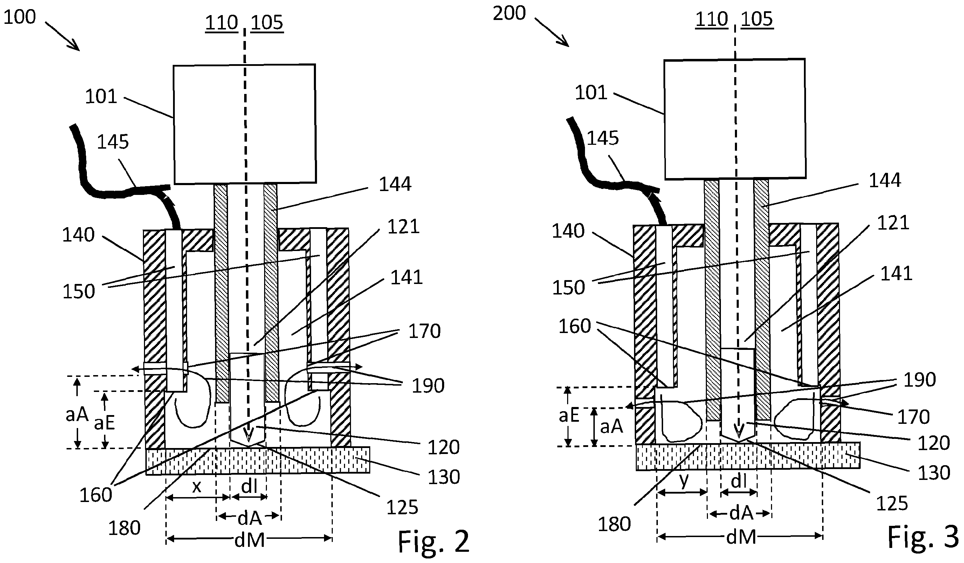

In Fig. 2 ist eine Schweissvorrichtung 100 schematisch in einem Längsschnitt dargestellt, welche zur Verschweissung eines Schweissbolzens 120 entlang einer Schweissachse 105 in einer Schweissrichtung 110 mit einem Untergrund 130 vorgesehen ist. Die Schweissvorrichtung 100 ist als eine die Schweissrichtung 110 definierende Schweisspistole ausgebildet. Die Schweissvorrichtung 100 weist eine als Bolzenhalter ausgebildete Haltevorrichtung 144 mit einem Aussendurchmesser dA auf, welche zum Halten des Schweissbolzens 120 während eines Schweissvorgangs eine Bolzenaufnahme 121 mit einem Innendurchmesser dl aufweist, in welche der Schweissbolzen 120 einsteckbar und vorzugsweise klemmend gehalten ist. Eine Kontaktfläche 125 des Schweissbolzens 120 kontaktiert vor und/oder während des Schweissvorgangs den Untergrund 130.

Die Schweissvorrichtung 100 umfasst ein schematisch dargestelltes Gehäuse 101 mit einem nicht gezeigten Griff und einem nicht gezeigten Auslöseschalter sowie eine Schutzgasglocke 140, welche dafür vorgesehen ist, mit Schutzgas gespült zu werden, um eine Oxidation der Schweissschmelze mit Sauerstoff aus der Umgebungsluft zu unterdrücken oder vollständig zu verhindern. Hierzu weist die Schutzgasglocke 140 einen Schutzgasvorlauf auf, welcher eine Vielzahl von ringförmig um die Schweissachse 105 angeordneten ersten Verbindungskanälen 150 umfasst. An den Schutzgasvorlauf ist ein Schutzgasschlauch 145 oder dergleichen zur Versorgung der Schutzgasglocke 140 anschliessbar. Jeder der bezüglich der Schweissachse 105 axial verlaufenden ersten Verbindungskanäle 150 mündet mit einer Einlassöffnung 160 in eine Hauptkammer 141 der Schutzgasglocke 140, so dass die Einlassöffnungen 160 ebenfalls ringförmig um die Schweissachse 105 angeordnet sind und zusammen einen Schutzgaseinlass bilden. Bei nicht gezeigten Ausführungsbeispielen umfasst der Schutzgaseinlass eine einzige ringförmige, die Schweissachse umlaufende Einlassöffnung. Ausserdem weist die Schutzgasglocke 140 eine Vielzahl von ebenfalls ringförmig um die Schweissachse angeordneten Auslassöffnungen 170 auf, welche bezüglich der Schweissachse 105 radial durch die Schutzgasglocke 140 nach aussen in die Umgebung führen und einen Schutzgasauslass bilden. In einer Richtung quer zu der Schweissachse 105 (in Fig. 2 senkrecht zur Zeichenebene), insbesondere in umlaufender Richtung, sind die Auslassöffnungen 170 jeweils versetzt zu den Einlassöffnungen 160 angeordnet.

Weiterhin weist die Schutzgasglocke 140 eine in die Schweissrichtung 110 weisende Mündung 180 auf, welche quer zu der Schweissrichtung 110 einen Mündungsdurchmesser dM aufweist. Der Schutzgaseinlass, nämlich die Einlassöffnungen 160, weisen entgegen der Schweissrichtung 110 einen Einlassabstand aE zu der Mündung 180 auf. Der Schutzgasauslass, nämlich die Auslassöffnungen 170, weisen entgegen der Schweissrichtung 110 einen Auslassabstand aA zu der Mündung 180 auf.

Der Auslassabstand aA ist etwa halb so gross wie eine Differenz aus dem Mündungsdurchmesser dM und dem Innendurchmesser dl, also etwa so gross wie ein radialer Abstand x zwischen dem Schweissbolzen 120 und der Schutzgasglocke 140. Ausserdem ist der Auslassabstand aA grösser als der Einlassabstand aE. Wenn die Mündung 180 von dem Untergrund 130 abgedeckt ist, strömt durch die Einlassöffnungen 160 in die Hauptkammer 141 einströmendes Schutzgas entlang den Strömungspfaden 190 erst auf einen radial äusseren Bereich der Mündung 180 zu, dann von allen Seiten radial nach innen auf den Schweissbolzen 120 zu, und dann im Wesentlichen axial nach oben zu den Auslassöffnungen 170. Es bildet sich also ein torusförmiges Strömungsmuster aus, welches radialsymmetrisch um die Schweissachse 105 angeordnet ist und eine gleichmässige und effektive Spülung der Schweissstelle bei dem Schweissbolzen 120 mit Schutzgas bewirkt. Umgebungsluft, welche beispielsweise aus dem engen Spalt zwischen der Haltevorrichtung 144 und der Schutzgasglocke (in Fig. 2 oberhalb der Auslassöffnungen 170) nur langsam entweicht, wird von der Strömung durch die Auslassöffnungen 170 mitgerissen und von der Schweissstelle abgeschirmt.

In Fig. 3 ist eine Schweissvorrichtung 200 schematisch in einem Längsschnitt dargestellt, welche in weiten Teilen mit der Schweissvorrichtung 100 (Fig. 2) übereinstimmt. Gleiche Elemente haben die gleichen Bezugszeichen. Die Schweissvorrichtung 200 unterscheidet sich von der Schweissvorrichtung 100 insbesondere durch die Anordnung der Einlassöffnungen 160 und der Auslassöffnungen 170. Der Auslassabstand aA ist etwa halb so gross wie eine Differenz aus dem Mündungsdurchmesser dM und dem Aussendurchmesser dA, also etwa so gross wie ein radialer Abstand y zwischen der Haltevorrichtung 144 und der Schutzgasglocke 140. Ausserdem ist der Auslassabstand aA kleiner als der Einlassabstand aE, aber mehr als halb so gross wie der Einlassabstand aE. In umlaufender Richtung um die Schweisachse 105 sind die Auslassöffnungen 170 jeweils versetzt zu den Einlassöffnungen 160 angeordnet, so dass eine Wechselwirkung zwischen ein- und ausströmendem Schutzgas reduziert ist.

Die Erfindung wurde anhand von Beispielen einer Schweisspistole beschrieben. Die Merkmale der beschriebenen Ausführungsformen sind dabei auch beliebig miteinander innerhalb einer einzigen Befestigungsvorrichtung kombinierbar. Es wird darauf hingewiesen, dass die erfindungsgemässe Vorrichtung auch für andere Zwecke geeignet ist.

## Patentansprüche

1. Schweissvorrichtung (100, 200), insbesondere Schweisspistole, zur Verschweissung eines Schweissbolzens (120) entlang einer Schweissachse in einer Schweissrichtung mit einem Untergrund (130), umfassend eine Schutzgasglocke (140) mit einem ringförmig um die Schweissachse angeordneten Schutzgaseinlass (150), mit einem Schutzgasauslass (170), und mit einer in die Schweissrichtung weisenden Mündung (180), wobei die Mündung quer zu der Schweissrichtung einen Mündungsdurchmesser (dM) aufweist, wobei der Schutzgaseinlass entgegen der Schweissrichtung einen Einlassabstand (aE) zu der Mündung aufweist, wobei der Schutzgasauslass entgegen der Schweissrichtung einen Auslassabstand (aA) zu der Mündung aufweist, weiterhin umfassend eine Haltevorrichtung (144) zum Halten des Schweissbolzens (120) innerhalb der Schutzgasglocke während eines Schweissvorgangs, wobei die Haltevorrichtung einen Aussendurchmesser (dA) und eine Bolzenaufnahme mit einem Innendurchmesser (dl) aufweist, **dadurch gekennzeichnet, dass** der Auslassabstand (170) mindestens die Hälfte einer Differenz aus dem Mündungsdurchmesser (dM) und dem Aussendurchmesser (dA) beträgt oder mindestens so gross ist wie der Einlassabstand (aE).

2. Schweissvorrichtung nach Anspruch 1, wobei der Auslassabstand mindestens die Hälfte der Differenz aus dem Mündungsdurchmesser und dem Innendurchmesser beträgt oder mindestens so gross ist wie der Einlassabstand.

3. Schweissvorrichtung nach einem der vorhergehenden Ansprüche, wobei der Auslassabstand mindestens die Hälfte der Differenz aus dem Mündungsdurchmesser und dem Aussendurchmesser beträgt und mindestens halb so gross ist wie der Einlassabstand.

4. Schweissvorrichtung nach einem der vorhergehenden Ansprüche, wobei der Schutzgaseinlass zur Erzeugung einer Schutzgasströmung entlang der Mündung radial auf die Setzachse zu, wenn die Mündung abgedeckt ist, auf einen radial äusseren Bereich der Mündung gerichtet ist.

5. Schweissvorrichtung nach einem der vorhergehenden Ansprüche, wobei der Schutzgaseinlass eine ringförmige, die Schweissachse umlaufende Einlassöffnung umfasst.

6. Schweissvorrichtung nach einem der vorhergehenden Ansprüche, wobei der Schutzgaseinlass eine Vielzahl von ringförmig um die Schweissachse angeordneten Einlassöffnungen umfasst.

7. Schweissvorrichtung nach einem der vorhergehenden Ansprüche, wobei der Schutzgasauslass eine Vielzahl von ringförmig um die Schweissachse angeordneten Auslassöffnungen umfasst.

8. Schweissvorrichtung nach einem der vorhergehenden Ansprüche, wobei der Schutzgasauslass bezüglich der Schweissachse radial durch die Schutzgasglocke nach aussen in die Umgebung führt.

9. Schweissvorrichtung nach einem der vorhergehenden Ansprüche, wobei der Schutzgasauslass in einer Richtung quer zu der Schweissachse versetzt zu dem Schutzgaseinlass angeordnet ist.

## Claims

1. Welding device (100, 200), in particular welding gun, for welding a welding stud (120) along a welding axis in a welding direction to a substrate (130), comprising an inert gas cover (140) having an inert gas inlet (150) which is disposed in an annular manner about the welding axis, having an inert gas outlet (170), and having an aperture (180) which points in the welding direction; wherein the aperture, transversely to the welding direction, has an aperture diameter (dM); wherein the inert gas inlet, counter to the welding direction, has an inlet spacing (aE) from the aperture; wherein the inert gas outlet, counter to the welding direction, has an outlet spacing (aA) from the aperture; furthermore comprising a holding device (144) for holding the welding stud (120) within the inert gas cover during a welding procedure, wherein the holding device has an external diameter (dA) and a stud fitting having an internal diameter (dl), **characterized in that** the outlet spacing (170) is at least half a difference calculated from the aperture diameter (dM) and the external diameter (dA), or is at least the size of the inlet spacing (aE).

2. Welding device according to Claim 1, wherein the outlet spacing is at least half the difference calculated from the aperture diameter and the internal diameter, or is at least the size of the inlet spacing.

3. Welding device according to one of the preceding claims, wherein the outlet spacing is at least half the difference calculated from the aperture diameter and the external diameter, and is at least half the size of the inlet spacing.

4. Welding device according to one of the preceding claims, wherein the inert gas inlet, for generating an inert gas flow along the aperture radially towards the setting axis when the aperture is covered, is directed onto a radially outer region of the aperture.

5. Welding device according to one of the preceding claims, wherein the inert gas inlet comprises an annular inlet opening which encircles the welding axis.

6. Welding device according to one of the preceding claims, wherein the inert gas inlet comprises a multiplicity of inlet openings which are disposed in an annular manner about the welding axis.

7. Welding device according to one of the preceding claims, wherein the inert gas outlet comprises a multiplicity of outlet openings which are disposed in an annular manner about the welding axis.

8. Welding device according to one of the preceding claims, wherein the inert gas outlet in terms of the welding axis leads radially through the inert gas cover outside into the environment.

9. Welding device according to one of the preceding claims, wherein the inert gas outlet is disposed so as to be offset from the inert gas inlet in a direction transverse to the welding axis.

## Revendications

1. Dispositif de soudage (100, 200), en particulier un pistolet de soudage, destiné à souder un boulon de soudage (120) à un substrat (130) le long d'un axe de soudage dans une direction de soudage, ledit dispositif de soudage comprenant une cloche à gaz de protection (140) comprenant une entrée de gaz de protection (150) disposée annulairement autour l'axe de soudage, une sortie de gaz de protection (170), et une embouchure (180) orientée dans la direction de soudage, l'embouchure ayant un diamètre d'embouchure (dM) transversalement à la direction de soudage, l'entrée de gaz de protection présentant une distance d'entrée (aE) à l'embouchure dans une direction opposée à la direction de soudage, la sortie de gaz de protection présentant une distance de sortie (aA) à l'embouchure dans une direction opposée à la direction de soudage, ledit dispositif de soudage comprenant en outre un dispositif de retenue (144) destiné à maintenir le boulon de soudage (120) à l'intérieur de la cloche de gaz de protection pendant un processus de soudage, le dispositif de retenue ayant un diamètre extérieur (dA) et comportant un logement de boulon d'un diamètre intérieur (dl), **caractérisé en ce que** la distance de sortie (170) est égale à au moins la moitié d'une différence entre le diamètre d'embouchure (dM) et le diamètre extérieur (dA) ou est au moins aussi grande que la distance d'entrée (aE).

2. Dispositif de soudage selon la revendication 1, la distance de sortie étant égale à au moins la moitié de la différence entre le diamètre de l'embouchure et le diamètre intérieur ou étant au moins aussi grande que la distance d'entrée.

3. Dispositif de soudage selon l'une des revendications précédentes, la distance de sortie étant égale à au moins la moitié de la différence entre le diamètre de l'embouchure et le diamètre extérieur et étant au moins aussi grande que la moitié de la distance d'entrée.

4. Dispositif de soudage selon l'une des revendications précédentes, l'entée de gaz de protection étant dirigée vers une zone radialement extérieure de l'embouchure afin de générer un écoulement de gaz de protection le long de l'embouchure radialement vers l'axe de réglage, lorsque l'embouchure est recouverte.

5. Dispositif de soudage selon l'une des revendications précédentes, l'entrée de gaz de protection comprenant une ouverture d'entrée annulaire s'étendant autour de l'axe de soudage.

6. Dispositif de soudage selon l'une des revendications précédentes, l'entrée de gaz de protection comprenant un grand nombre d'ouvertures d'entrée disposées annulairement autour de l'axe de soudage.

7. Dispositif de soudage selon l'une des revendications précédentes, la sortie de gaz de protection comprenant un grand nombre d'ouvertures de sortie disposées annulairement autour de l'axe de soudage.

8. Dispositif de soudage selon l'une des revendications précédentes, la sortie de gaz de protection menant radialement vers l'extérieur à travers la cloche de gaz de protection jusque dans l'environnement par rapport à l'axe de soudage.

9. Dispositif de soudage selon l'une des revendications précédentes, la sortie de gaz de protection étant disposée de manière décalée par rapport à l'entrée de gaz de protection dans une direction transversale à l'axe de soudage.
